**Europäisches Patentamt**

**European Patent Office**

**Office européen des brevets**

(19)

(11)  **EP 0 514 729 B1**

(12)  **EUROPÄISCHE PATENTSCHRIFT**

(45) Veröffentlichungstag und Bekanntmachung des Hinweises auf die Patenterteilung:
**24.04.1996  Patentblatt 1996/17**

(51) Int. Cl.$^6$: **B01D 53/58**,  B01J 23/34,
B01J 23/68,  B01J 23/84

(21) Anmeldenummer: **92107860.6**

(22) Anmeldetag: **11.05.1992**

(54) **Verfahren zur Entfernung des Ammoniakgehaltes in Gasen**

Process for removal of ammonia contained in gases

Procédé pour éliminer l'ammoniac se trouvant dans les gaz

(84) Benannte Vertragsstaaten:
**AT BE CH DE DK ES FR GB IT LI NL PT SE**

(30) Priorität: **18.05.1991 DE 4116362**

(43) Veröffentlichungstag der Anmeldung:
**25.11.1992  Patentblatt 1992/48**

(73) Patentinhaber: **Solvay Deutschland GmbH**
**D-30173 Hannover (DE)**

(72) Erfinder:
* **Strauss, Günther**
**W-3000 Hannover 1 (DE)**
* **Schultz, Egon**
**W-3160 Lehrte (DE)**
* **Schwetje, Norbert**
**W-3000 Hannover 72 (DE)**
* **Falke, Holger**
**W-3005 Hemmingen 1 (DE)**

(74) Vertreter: **Lauer, Dieter, Dr.**
**Solvay Pharma Deutschland GmbH**
**Hans-Böckler-Allee 20**
**D-30173 Hannover (DE)**

(56) Entgegenhaltungen:
**EP-A- 0 290 947**          **DD-A- 242 184**
**DE-A- 3 126 675**          **GB-A- 1 368 142**

* **PATENT ABSTRACTS OF JAPAN, unexamined applications, C Sektion, Band 1, Nr. 79, 26. Juli 1977 THE PATENT OFFICE JAPANESE GOVERNMENT, Seite 1631 C77 Nr. 52-43 768**
* **Patent Abstracts of Japan, Nr 52-43767**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft die Entfernung oder Verminderung des Ammoniak-Gehaltes in Gasen.

Ammoniak ($NH_3$) wird in verschiedenen industriellen Prozessen benötigt, beispielsweise beim Solvay-Verfahren zur Sodaherstellung. Entsprechend fallen Abgase und auch Abwässer an, die Ammoniak oder, im Falle der Abwässer bei entsprechendem pH-Wert, Ammoniak oder das Ammonium-Ion enthalten.

Weitere Quellen für Ammoniak oder Ammonium-Ionen in Abgas oder Abwasser stellen der mikrobiologische Abbau von Nitrit oder Nitrat, z.B. in Kläranlagen oder Mülldeponien, die Abluft aus Viehhaltungen sowie kommunale Abwässer dar.

Die Freisetzung von Ammoniak bedeutet, wie man heute weiß, für die Umwelt eine Geruchsbelästigung und bei höheren Konzentrationen eine Gesundheitsgefährdung.

Eine wirtschaftliche Möglichkeit zur Ammoniakbeseitigung sind katalytisch arbeitende Zersetzungsverfahren. Die katalytische Zersetzung von Ammoniak in der Gasphase mit Platin-Katalysatoren ist aus der Salpetersäuregewinnung bekannt. Platin ist sehr aktiv und gestattet die Ammoniakzersetzung bereits bei Temperaturen ab 200 °C. Die Verwendung solcher Katalysatoren im Bereich der Abluftreinigung ist jedoch nicht mehr praktikabel, weil ein erheblicher Teil des Ammoniaks in Distickstoffmonoxid und Stickstoffmonoxid umgewandelt wird. Distickstoffmonoxid trägt nach allgemeiner Auffasssung zum Treibhauseffekt bei, Stickstoffmonoxid ist gesundheitsschädigend.

Katalysatoren, welche die Ammoniak-Zersetzung unter selektiver Bildung von Stickstoff bewirken, sind bereits bekannt. Als besonders selektiv erwiesen sich Molybdäntrioxid und Vanadinpentoxid. Diese beiden Katalysatoren besitzen aber eine verhältnismäßig geringe Aktivität.

Die EP-A-0 290 947 offenbart ein Verfahren zur katalytischen Beseitigung von Ammoniak aus Abgasen. Verwendet wird ein Katalysator, der obligatorisch $TiO_2$ und daneben eines oder mehrere der Übergangsmetalloxide $Cr_2O_3$, $MnO_2$ und $CuO$ enthält.

Die GB-A 1 368 142 offenbart Katalysatoren für die Oxidation gasförmiger organischer Verbindungen. Beispielsweise reinigt man Abgase von toxischen Lösemitteldämpfen, Verbrennungsanlagen und Motorabgasen; so kann man Pyridin oder Methylpyrrolidon oxidieren. Als katalytisch wirksames Gemisch wird eine Mischung von Manganoxiden und $CuO$ verwendet, die auch noch $MnCO_3$ und $NiO$ enthalten kann. Die JP-A 52/043767 (Patent Abstracts of Japan, C-Sektion, Band 1, Nr. 79, Seite 1631C77) offenbart ein Verfahren zur Oxidation von $NH_3$ unter Bildung von $N_2$ und Wasser. Man verwendet einen Katalysator, der Cu und/oder Ni und eines oder mehrere Oxide von Metallen der Gruppe Ti, V, Fe, Zn, Zr, Mo, Sn, W und Bi umfaßt.

Aufgabe der vorliegenden Erfindung ist es, ein neues wirtschaftlich arbeitendes Verfahren zur Entfernung von Ammoniak aus Gasen bereitzustellen.

Insbesondere ist es Aufgabe der Erfindung, ein Verfahren zur Zersetzung von Ammoniak in Gasen bereitzustellen, bei welchem der Ammoniak-Gehalt unter Bildung von Stickstoff und gegebenenfalls Wasser entfernt wird, ohne daß das Gas mit unerwünschten Mengen an Stickoxiden oder Distickstoffmonoxid belastet wird.

Es wurde nun ein Verfahren zur Entfernung oder Verminderung des Ammoniak-Gehalts aus mit Ammoniak belasteten Gasen unter selektiver Stickstoffbildung unter weitgehender Vermeidung der Bildung von Stickoxiden bereitgestellt, welches insbesondere bei der Aufbereitung von Ammoniak enthaltenden Gasen, beispielsweise industriellen Abgasen wie Abgasen aus der Soda-Herstellung oder aus Kraftwerken, landwirtschaftlichen Abgasen, beispielsweise Abluft aus der Großviehhaltung, aus Abgasen von Kläranlagen und Mülldeponien, und, nach einer entsprechenden Vorbehandlung, auch für den Ammoniak- oder Ammonium-Ionen-Gehalt von Wässern und Abwässern, beispielsweise landwirtschaftlichen Abwässern wie Gülle oder Jauche oder kommunalen Abwässern anwendbar ist.

Das erfindungsgemäße Verfahren zur Entfernung oder Verminderung des Ammoniakgehalts aus mit Ammoniak belasteten Gasen unter selektiver Stickstoffbildung unter Kontaktieren des Gases bei erhöhter Temperatur mit einem Mischoxidkatalysator, welcher ein Oxid des Mangans umfaßt, ist dadurch gekennzeichnet, daß man das mit Ammoniak belastete Gas bei einer Temperatur zwischen 200 bis 400 °C mit einem Vollkatalysator oder einem Trägerkatalysator auf Basis von $SiO_2$, Alumosilikat oder $Al_2O_3$ kontaktiert, wobei das katalytisch aktive Gemisch ein Gemisch ausschließlich aus a) einem Oxid von Mangan und b) mindestens einem Oxid von Eisen, Kobalt, Nickel, Kupfer und/oder Silber ist.

Der Begriff "Oxid von Mangan" umfaßt Oxide des Mangans, in welchen das Mangan in den Oxidationsstufen +2, +3, +4 vorliegen kann. Bevorzugtes Oxid ist $MnO_2$.

Der Begriff "Oxid von Eisen", "Oxid von Kobalt", "Oxid von Nickel" umfaßt Oxide der genannten Metalle in den Oxidationsstufen +2 bzw. +3. Der Begriff "Oxid von Kupfer" umfaßt Kupferoxid, in welchen das Kupfer in der Oxidationsstufe +1 bzw. +2 vorliegen kann. Der Begriff "Oxid von Silber" umfaßt $Ag_2O$.

Selbstverständlich sind auch Oxide verwendbar, in welchen Metalle in unterschiedlichen Oxidationsstufen gemischt vorliegen können.

Bevorzugt verwendet man im erfindungsgemäßen Verfahren einen Katalysator mit einem katalytisch aktiven Gemisch ausschließlich aus Mangandioxid und $Fe_2O_3$, einem Gemisch von Mangandioxid und CoO, von Mangandioxid und NiO, von Mangandioxid und CuO und/oder einem Gemisch von Mangandioxid und $Ag_2O$. Besonders bevorzugt verwendet man einen Katalysator mit einem katalytisch aktiven Gemisch aus Mangandioxid und $Fe_2O_3$.

Das katalytisch aktive Gemisch kann als Vollkatalysator ohne Träger ausgebildet sein. Bevorzugt setzt man das katalytisch aktive Gemisch aufgebracht auf einen Träger ein. als Träger kann man übliche Trägermaterialien verwenden. Vorzugsweise verwendet man einen keramischen Träger, z.B. einen Träger aus Alumosilikaten oder $SiO_2$, Silikaten, Aluminiumoxid, insbesondere γ-Aluminiumoxid.

Zweckmäßig enthält der Trägerkatalysator das katalytisch aktive Gemisch in einer Menge von 0,01 bis 20 Gew.-%, bezogen auf das Gesamtgewicht des Trägerkatalysators.

Verwendet man ein als Vollkontakt vorliegendes katalytisch aktives Gemisch, liegen die Katalysatorpartikel zweckmäßig in Form von Pulvern, Granulaten, Kugeln, Perlen, Extrudat oder anderen Schüttgutformen vor. Verwendet man Trägerkatalysatoren, kann man im Prinzip beliebige Trägerformen verwenden. Beispielsweise kann man Trägerkatalysatoren in Form von Pulvern, Granulaten, Kugeln, Perlen, Zylindern, Hohlzylindern oder Hohlkugeln, Extrudat, Schaumkeramik oder Monolith verwenden.

Sofern man das erfindungsgemäße Verfahren in der Wirbelschicht durchführt, empfiehlt es sich, Katalysatorteilchen bzw. Trägerkatalysatorteilchen mit Teilchengrößen von etwa 0,3 bis 2 mm Durchmesser einzusetzen, insbesondere in Form von Granulaten, Kugeln, Perlen oder als gebrochenes Extrudat.

Bevorzugt kontaktiert man das zu behandelnde Gas mit dem Katalysator bzw. Trägerkatalysator bei einer Temperatur zwischen etwa 225 und etwa 375 °C, insbesondere zwischen etwa 250 und etwa 350 °C.

Im Rahmen der vorliegenden Erfindung können Ammoniak enthaltende Gase beliebiger Herkunft behandelt werden, sofern sie im wesentlichen frei von Stoffen sind, welche bekanntermaßen als Gifte für Katalysatoren wirken, welche Oxide von Mangan, Eisen, Kobalt, Nickel, Kupfer oder Silber enthalten, oder, sofern vorhanden, das Trägermaterial angreifen. Etwaig vorhandener Wasserdampf in solchen Gasen stört nicht. Ob in den zu reinigenden Gasen auch organische Verbindungen, beispielsweise aliphatische Kohlenwasserstoffe oder Alkohole, Aldehyde oder ähnliches vorhanden sind, ist für den Erfolg des erfindungsgemäßen Verfahrens ohne Einfluß. Es können Gase gereinigt werden, welche organische Verbindungen enthalten. Es können auch Gase gereinigt werden, welche keine organischen Verbindungen enhalten. Es ist keinesfalls notwendig, organische Stoffe beizumischen.

Der Gehalt an Ammoniak in den zu behandelnden Gasen kann im weiten Bereich variieren. Beispielsweise kann man Gase mit einem Ammoniak-Gehalt zwischen 10 und 5.000 ppm behandeln (in der vorliegenden Anmeldung bezeichnet "ppm" immer das Verhältnis zweier Volumina).

Prinzipiell kann man das Verfahren auf im wesentlichen sauerstofffreie Gase anwenden. In diesem Fall wird das vorhandene Ammoniak in Stickstoff und Wasserstoff umgewandelt.

Gewünschtenfalls kann das Verfahren auch auf solche Gase angewendet werden, welche Sauerstoff in einer Menge enthalten, die kleiner ist als stöchiometrisch zur vollständigen Oxidation des Ammoniaks zu Stickstoff und Wasser notwendig. Aus Sicherheitsgründen sollte jedoch mindestens soviel Sauerstoff in den zu behandelnden Gasen vorhanden sein, wie zur vollständigen Oxidation des gebundenen Wasserstoffes notwendig ist. Sofern in den zu behandelnden Gasen nicht bereits ausreichend Sauerstoff enthalten ist, wie dies in den meisten Anwendungsfällen der Fall ist, kann man gewünschtenfalls vor der erfindungsgemäßen katalytischen Behandlung dem zu behandelnden Gas Luft oder Sauerstoff beimischen.

Die katalytische Oxidation von Ammoniak zu Stickstoff und Wasser kann durch die folgende Gleichung summarisch wiedergegeben werden :

$$2\ NH_3 + 1{,}5\ O_2 \rightarrow N_2 + 3\ H_2O$$

Das erfindungsgemäße Verfahren kann im katalytischen Festbett oder der katalytischen Wirbelschicht durchgeführt werden. Die katalytische Wirbelschicht ist insofern vorteilhaft, weil bei dieser Verfahrensvariante ein sehr enger Temperaturgradient in der katalytischen Schicht vorliegt und man eine optimale Umsetzungstemperatur leicht ermitteln und auch während der gesamten Umsetzung beibehalten kann.

Gewünschtenfalls kann man das gereinigte Abgas dem noch zu reinigenden Abgas in einem mehr oder weniger großen Anteil beimischen. Hierbei wird einerseits die Gesamtimmission verringert, andererseits ist es möglich, den etwaig vorhandenen Gehalt an Sauerstoff im zu reinigenden Abgas zu verringern oder auf einen bestimmten Wert einzustellen.

Das Verfahren ist sehr gut auf Ammoniak enthaltende Abgase der Soda-Produktion, Ammoniak enthaltende Kraftwerksabgase, Abluft aus der Großvieh-Haltung oder Abluft aus Klärwerken oder Mülldeponien anzuwenden.

Das erfindungsgemäße Verfahren eignet sich weiterhin zur Entfernung oder Verminderung des Gehaltes an Ammoniak oder Ammonium-Ionen in Wasser oder Abwasser, beispielsweise in landwirtschaftlichen Abwässern wie Gülle oder Jauche, industriellen Abwässern oder kommunalen Abwässern. Hierzu wird das Ammoniak oder Ammonium-Ionen enthaltende Abwasser auf einen pH-Wert oberhalb von etwa 10,5 gebracht, falls es nicht einen solchen pH-Wert bereits aufweist. Die pH-Werteinstellung kann durch Zusatz von Base, beispielsweise Natronlauge geschehen. Anschließend wird das Ammoniak zweckmäßigerweise durch Einblasen eines Gases aus dem Wasser ausgetrieben ("Strippen"). Als solches "Strippgas" kann kalte oder erhitzte Luft verwendet werden. Besonders zweckmäßig ist es, das gereinigte Abgas, das noch heiß aus der katalytischen Reinigung austritt, als Strippgas zu verwenden. Das NH$_3$ enthaltende Strippgas wird dann, gegebenenfalls unter Vermischung mit Luft, erfindungsgemäß behandelt.

Eingangs wurde bereits festgestellt, daß im erfindungsgemäßen Verfahren besonders bevorzugt Katalysatoren eingesetzt werden, die ein katalytisch aktives Gemisch von Mangandioxid und Fe$_2$O$_3$, Mangandioxid und CoO, Mangandioxid und NiO, Mangandioxid und CuO oder Mangandioxid und Ag$_2$O enthalten. Bevorzugt verwendet man Trägerkatalysatoren, insbesondere jene Trägerkatalysatoren, deren katalytisch aktives Gemisch aus den vorgenannten Paaren von Oxiden besteht. Ganz besonders bevorzugt und Gegenstand der Erfindung ist ein Trägerkatalysator mit einem katalytisch aktiven Gemisch aus ausschließlich Mangandioxid und Fe$_2$O$_3$ auf γ-Al$_2$O$_3$ als Träger.

Die Trägerkatalysatoren können übliche Trägermaterialien, insbesondere keramisches Material, aufweisen. Vorzugsweise besteht der Träger aus SiO$_2$, Silikaten, Alumosilikaten oder Aluminiumoxid, insbesondere γ-Aluminiumoxid. Das katalytisch aktive Gemisch kann im verwendeten Trägerkatalysator in einer mehr oder weniger großen Menge, beispielsweise zwischen etwa 0,01 und 20 Gew.-%, bezogen auf das Gesamtgewicht des Trägerkatalysators, enthalten sein. Bevorzugt sind Trägerkatalysatoren, in denen das katalytisch aktive Gemisch in einer Menge von etwa 0,5 bis 10 Gew.-% enthalten ist.

Das Molverhältnis der Metalloxide kann in einem weiten Bereich schwanken. Das Molverhältnis zwischen Mangandioxid und Eisen(III)oxid kann beispielsweise in einem Bereich zwischen 1:100 und 100:1 liegen. Bevorzugt liegt es zwischen 50:1 und 1:50, insbesondere zwischen 25:1 und 1:25. Vergleichbar sind die Werte für die anderen katalytisch aktiven Gemische.

Die Herstellung von Vollkontaktkatalysatoren zur Anwendung im erfindungsgemäßen Verfahren kann nach Vorgehensweisen erfolgen, wie sie zur Herstellung von Oxidgemischen bekannt sind. Beispielsweise kann man eine wäßrige Lösung herstellen, welche ein Mangansalz und ein Eisensalz enthält. Dann wird durch Erhöhen des pH-Wertes eine Fällung bewirkt. Das gefällte Gemisch aus Manganhydroxid und Eisenhydroxid wird von der verbleibenden wäßrigen Phase abfiltriert, gewünschtenfalls mit einem Bindemittel versetzt und in die gewünschte Form gebracht. Danach wird bei ausreichend hoher Temperatur kalziniert, um die Hydroxide in die gewünschten Oxide zu überführen. In ganz analoger Weise kann man entsprechende andere Oxidgemische, z.B. Oxidgemische aus Mangandioxid und Nickeloxid, Mangandioxid und Kobaltoxid, Mangandioxid und Nickeloxid, Mangandioxid und Kupferoxid bzw. Mangandioxid und Silberoxid herstellen. Bei dieser Herstellungsweise erzielt man eine gleichmäßige Vermischung der Oxide.

Die Herstellung der erfindungsgemäßen Trägerkatalysatoren geschieht nach Vorgehensweisen, wie sie zur Herstellung derartiger Übergangsmetalloxid-Trägerkatalysatoren bekannt sind.

Beispielsweise kann man handelsübliche Träger, z.B. Siliciumdioxid-, Aluminiumoxid- oder Alumosilikat-Träger mit einer BET-Oberfläche im Bereich von 10 bis 200 m$^2$ verwenden. Auf den Träger bringt man eine Verbindung des gewünschten Metalls im Tränkverfahren, Sprühverfahren oder Fällungsverfahren auf und kalziniert anschließend nach Trocknung. Die Trägerkatalysatoren weisen dann das gewünschte katalytisch aktive Gemisch auf und sind einsatzbereit.

Zweckmäßigerweise führt man die Imprägnierung mit den entsprechenden Metallnitraten durch. Selbstverständlich kann man aber auch andere anorganische oder organische Verbindungen verwenden. Bei der Herstellung kann man übrigens die jeweiligen Metallsalze gleichzeitig oder nacheinander auf den Träger aufbringen, wobei die Reihenfolge nicht wichtig ist. Am einfachsten ist es, den Träger mit einer Lösung in Kontakt zu bringen, die Salze aller aufzubringenden Metalle enthält. Nach dem Aufbringen der Metallsalze wird der Träger dann, gewünschtenfalls nachdem er zunächst getrocknet wurde, kalziniert.

Die Vorrichtung, in welcher das erfindungsgemäße Verfahren durchgeführt wird, kann sehr einfach aufgebaut sein. Man benutzt übliche Festbett- oder Wirbelschicht-Reaktoren, welche Öffnungen für die Zuführung des zu reinigenden Abgases, für die Abführung des gereinigten Abgases und gegebenenfalls Öffnungen für Einrichtungen zur Temperaturkontrolle aufweisen.

Gewünschtenfalls kann man Vorrichtungen zur Beheizung des verwendeten Monolithen bzw. des Festbett- oder Wirbelschicht-Reaktors vorsehen. Zweckmäßig sind weiterhin Vorrichtungen zur Erhitzung des zu reinigenden Abgases und zur Abkühlung des gereinigten Abgases. Dies geschieht zweckmäßigerweise in entsprechenden, auch untereinander gekoppelten, Wärmetauschern.

Weiterhin kann man Vorrichtungsteile vorsehen, die die Rückführung des gereinigten Abgases unter Beimischung zum zu reinigenden Abgas ermöglichen.

Sofern man den Ammoniak- oder Ammonium-Ionen-Gehalt aus Abwässern entfernen will, benötigt man noch eine zusätzliche Einrichtung, in welcher man das Ammoniak bzw. die Ammonium-Ionen der wäßrigen Lösung in die Gasphase überführt. Zweckmäßig sieht man hier einen geschlossenen Behälter vor, welcher einen Zulauf für das Ammoniak oder Ammonium-Ionen enthaltende Abwasser aufweist, einen Ablauf für das gereinigte Abwasser, eine Zuführung für Strippgas, eine Zuführung für eine Base, beispielsweise Natronlauge, eine Meßeinrichtung zur Bestimmung des pH-Wertes und der Temperatur, eine Rühreinrichtung und eine Abführung für das, das ausgetriebene Ammoniak enthaltende Gas.

Abwandlungen der Apparatur liegen im Belieben des Fachmanns. Beispielsweise kann er mehrere Reaktoren hintereinander schalten. Es können weiterhin Meßeinrichtungen zur Bestimmung des Ammoniak- bzw. Ammonium-Ionen-Gehaltes im zu reinigenden Abgas oder in der zu reinigenden wäßrigen Lösung vorgesehen werden, eine Meßeinrichtung zur Bestimmung des Ammoniak-Gehaltes im gereinigten Abgas oder im gereinigten Abwasser etc.

Das erfindungsgemäße Verfahren zeichnet sich durch einen sehr hohen Umsatz bei gleichzeitig sehr hoher Selektivität aus. Edelmetallhaltige Katalysatoren werden vorteilhafterweise nicht benötigt.

Die folgenden Beispiele sollen das erfindungsgemäße Verfahren weiter erläutern, ohne es in seinem Umfang einzuschränken.

Beispiel 1:

Herstellung und Anwendung eines Mangandioxid und Nickeloxid enthaltendes Trägerkatalysators.

1.1. Herstellung des Trägerkatalysators

Verwendet wurde ein $\gamma$-Aluminiumoxid-Träger in Form von Strangpreßlingen mit einem Durchmesser von 1,5 mm und einer Länge zwischen 4 und 10 mm (Condea-H-D-Träger, Handelsprodukt der Firma Condea, Hamburg). Die spezifische Oberfläche dieses Trägers betrug etwa 200 $m^2$/g. Eingesetzt wurden 200 g des Trägers.

In 130 ml entmineralisiertem Wasser wurden 25,1 g Mangandinitrattetrahydrat (0,1 mol entsprechend 8,7 g Mangandioxid) und 7,44 g Nickeldinitrat-hexahydrat (0,0256 mol entsprechend 1,91 g Nickeloxid) gelöst. In die Lösung wurde das Trägermaterial eingebracht und die Lösung dann auf etwa 80 °C aufgeheizt. Nach 30 Minuten war die Lösung vollständig vom Trägermaterial aufgenommen. (Alternativ könnte die Imprägnierung auch durch Begießen oder Besprühen des Trägermaterials mit der Lösung in einem Mischer bei Raumtemperatur erfolgen). Das imprägnierte Trägermaterial wurde dann 16 Stunden lang bei etwa 80 °C getrocknet. Anschließend wurde das Trägermaterial kalziniert, indem es zunächst auf 650 °C in einem Muffelofen aufgeheizt wurde und dann noch 1 Stunde lang bei dieser Temperatur gehalten wurde. Nach dem Kalzinieren war der Trägerkatalysator einsetzbar. Er enthielt pro 100 g Trägermaterial 4,35 g Mangandioxid und 0,855 g Nickeloxid. Das Molverhältnis von Mangandioxid zu Nickeloxid betrug etwa 3,9:1.

1.2. Anwendung des in 1.1. hergestellten Trägerkatalysators zur Entfernung des Ammoniakgehaltes in mit Ammoniak belasteter Luft.

34,4 g entsprechend einem Volumen von 50 ml des unter 1.1. hergestellten Trägerkatalysators wurde in einen Rohrreaktor eingebracht. Durch das Katalysatormaterial wurde Luft geleitet, die einen Gehalt von etwa 1000 ppm Ammoniak enthielt. Der Volumenstrom betrug etwa 800 l/Stunde, die Raumgeschwindigkeit 16.000 l/h. Um die Wirksamkeit des Trägerkatalysators bei verschiedenen Temperaturen zu bestimmen, wurde die Luft vor dem Einleiten in den Reaktor mehr oder weniger stark erhitzt. In der folgenden Tabelle ist die jeweilige Katalysatortemperatur, der Gehalt an Ammoniak, Distickstoffmonoxid und Stickoxiden in ppm nach Durchleiten durch den Reaktor, der Ammoniakumsatz, der Restgehalt an Ammoniak und der Gehalt an gebildetem Distickstoffmonoxid und Stickoxiden zusammengestellt. Im Katalysatorträger bildete sich ein Temperaturgefälle aus. Die angegebene Temperatur entspricht immer der Temperatur des Katalysators im Einlaßbereich für das zu reinigende Gas.

**Tabelle 1:** $MnO_2$-NiO-Trägerkatalysator

| Vers. Nr. | Kat.-Temp. [°C] | NH3-Konz. vor Behandlg. [ppm] | NH3-Konz. [ppm] | N2O [ppm] | NOX [ppm] | Umsatz [%] | Restgehalt NH3 [%] | Umwandlg. in N2O [%] | Umwandlg. in NOX [%] |
|---|---|---|---|---|---|---|---|---|---|
| 1.2.1. | 200 | 1000 | 480 | 40 | 3 | 52 | 48 | 4 | 0 |
| 1.2.2. | 225 | 1000 | 350 | 50 | 5 | 65 | 35 | 5 | 1 |
| 1.2.3. | 250 | 1000 | 160 | 55 | 8 | 84 | 16 | 6 | 1 |
| 1.2.4. | 275 | 1000 | 40 | 60 | 10 | 96 | 4 | 6 | 1 |
| 1.2.5. | 300 | 1000 | 0 | 60 | 10 | 100 | 0 | 6 | 1 |
| 1.2.6. | 325 | 1000 | 0 | 55 | 13 | 100 | 0 | 5 | 1 |
| 1.2.7. | 350 | 1000 | 0 | 50 | 30 | 100 | 0 | 5 | 3 |
| 1.2.8. | 375 | 1000 | 0 | 50 | 75 | 100 | 0 | 5 | 8 |

Die Katalysatortemperatur (Spalte Kat.Temp.) wurde im Gaseinlaßbereich gemessen
Der Restgehalt an $NH_3$ wurde bezogen auf den ursprünglichen Gehalt an $NH_3$

NH3 = $NH_3$
N2O = $N_2O$
NOX = $NO_x$

Aus der Tabelle 1 ist zu ersehen, daß bereits bei 250 °C der größte Teil des ursprünglich vorhandenen Ammoniaks zu Stickstoff umgewandelt wurde. Optimale Ergebnisse werden zwischen 275 °C und 325 °C erzielt.

Beispiel 2:

Herstellung und Anwendung eines Kupferoxid und Mangandioxid enthaltenden Trägerkatalysators

2.1. Herstellung des Trägerkatalysators

Als Trägermaterial wurden wiederum 200 g des bereits unter 1.1. beschriebenen $\gamma$-Aluminiumoxid-Trägers der Firma Condea verwendet.

In 130 ml entmineralisiertem Wasser wurden 25,1 g Mangandinitrattetrahydrat (0,1 mol entsprechend 8,7 g Mangandioxid) und 6,81 g Kupferdinitrat-trihydrat (0,0256 mol entsprechend 2,03 g Kupferoxid) aufgelöst. In die Lösung wurden 200 g des Condea-Trägers eingebracht und 30 Minuten unter Aufheizen der Lösung auf 80 °C getränkt. Die Lösung wurde vollständig vom Trägermaterial aufgenommen. (Alternativ könnte die Lösung auch durch Begießen oder Besprühen in einem Mischer bei Raumtemperatur aufgebracht werden). Das Trägermaterial wurde dann 16 Stunden bei 80 °C getrocknet und dann in einem Muffelofen auf 650 °C erhitzt und dort 1 Stunde lang bei dieser Temperatur kalziniert. Anschließend war das Trägermaterial verwendbar. Es enthielt pro 100 g Träger 4,35 g Mangandioxid und 1,015 g Kupferoxid. Das Molverhältnis von Mangandioxid zu Kupferoxid betrug 3,9:1.

2.2. Anwendung des Trägerkatalysators zur Entfernung des Ammoniakgehaltes in Ammoniak enthaltender Luft

Die Durchführung erfolgte analog dem Beispiel 1.2.. Das Katalysatorvolumen betrug wieder 50 ml, das Gewicht des eingesetzten Trägermaterials 34,9 g. Die bei den verschiedenen Temperaturen gewonnenen Daten sind in Tabelle 2

zusammengestellt.

**Tabelle 2:** MnO$_2$-CuO-Trägerkatalysator

| Vers. Nr. | Kat.-Temp. [°C] | NH3-Konz. vor Behandlung [ppm] | NH3-Konz. [ppm] | N2O [ppm] | NOX [ppm] | Umsatz [%] | Restgehalt NH3 [%] | Umwandlg. in N2O [%] | Umwandlg. in NOX [%] |
|---|---|---|---|---|---|---|---|---|---|
| 2.1. | 200 | 1000 | 350 | 10 | 3 | 65 | 35 | 1 | 0 |
| 2.2. | 225 | 1000 | 450 | 20 | 4 | 55 | 45 | 2 | 0 |
| 2.3. | 250 | 1000 | 380 | 20 | 5 | 62 | 38 | 2 | 1 |
| 2.4. | 275 | 1000 | 110 | 20 | 8 | 89 | 11 | 2 | 1 |
| 2.5. | 300 | 1000 | 20 | 20 | 7 | 98 | 2 | 3 | 1 |
| 2.6. | 328 | 1000 | 0 | 30 | 5 | 100 | 0 | 3 | 1 |
| 2.7. | 349 | 1000 | 0 | 20 | 10 | 100 | 0 | 2 | 1 |
| 2.8. | 376 | 1000 | 0 | 20 | 28 | 100 | 0 | 2 | 3 |

Die Katalysatortemperatur (Spalte Kat.Temp.) wurde im Gaseinlaßbereich gemessen
Der Restgehalt an NH$_3$ wurde bezogen auf den ursprünglichen Gehalt an NH$_3$

NH3 = NH$_3$
N2O = N$_2$O
NOX = NO$_x$

Der Tabelle 2 kann entnommen werden, daß für diesen Katalysator der optimale Temperaturbereich zwischen 275 °C und 350 °C liegt.

Beispiel 3:

Herstellung und Anwendung eines Mangandioxid und Kobaltoxid enthaltenden Trägerkatalysators

3.1. Herstellung des Trägerkatalysators

Verwendet wurden 200 g des bereits unter 1.1. beschriebenen $\gamma$-Aluminiumoxid-Trägermaterials der Firma Condea. In 130 ml entmineralisiertem Wasser wurden 25,1 g Mangandinitrattetrahydrat (0,1 mol entsprechend 8,7 g Mangandioxid) und 7,44 g Kobaltdinitrat-hexahydrat (0,0256 mol entsprechend 1,92 g Kobaltoxid) aufgelöst. Das Trägermaterial wurde analog zu den Beispielen 1.1. bzw. 2.1. in die Salzlösung eingebracht, getränkt, getrocknet und kalziniert. Der kalzinierte Trägerkatalysator enthielt 4,35 g Mangandioxid und 0,96 g Kobaltoxid pro 100 g Trägermaterial. Das Molverhältnis von Mangandioxid zu Kobaltoxid betrug 3,9:1.

3.2. Anwendung des Mangandioxid und Kobaltoxid enthaltenden Trägerkatalysators zur Entfernung des Ammoniakgehaltes in Ammoniak enthaltender Luft

In den Rohrreaktor wurden 50 ml des Trägerkatalysators (Gewicht: 35,1 g) eingebracht. Die Durchführung erfolgte wie in 1.2. beschrieben. Die gemessenen Daten sind in Tabelle 3 zusammengestellt.

**Tabelle 3:** MnO$_2$-CoO-Trägerkatalysator

| Vers. Nr. | Kat.-Temp. [°C] | NH3-Konz. vor Behandlung [ppm] | NH3-Konz. [ppm] | N2O [ppm] | NOX [ppm] | Umsatz [%] | Restgehalt NH3 [%] | Umwandlung in N2O [%] | Umwandlung in NOX [%] |
|---|---|---|---|---|---|---|---|---|---|
| 2.1. | 200 | 1000 | 550 | 0 | 1 | 45 | 55 | 0 | 0 |
| 2.2. | 225 | 1000 | 500 | 20 | 3 | 50 | 50 | 2 | 0 |
| 2.3. | 250 | 1000 | 220 | 20 | 3 | 78 | 22 | 2 | 0 |
| 2.4. | 275 | 1000 | 80 | 20 | 4 | 92 | 8 | 2 | 0 |
| 2.5. | 300 | 1000 | 30 | 0 | 12 | 97 | 3 | 0 | 1 |
| 2.6. | 325 | 1000 | 0 | 0 | 13 | 100 | 0 | 0 | 1 |
| 2.7. | 350 | 1000 | 0 | 20 | 40 | 100 | 0 | 2 | 4 |
| 2.8. | 375 | 1000 | 0 | 20 | 100 | 100 | 0 | 2 | 10 |

Die Katalysatortemperatur (Spalte Kat.Temp.) wurde im Gaseinlaßbereich gemessen
Der Restgehalt an NH$_3$ wurde bezogen auf den ursprünglichen Gehalt an NH$_3$

NH3 = NH$_3$
N2O = N$_2$O
NOX = NO$_x$

Der Tabelle 3 kann entnommen werden, daß dieser Trägerkatalysator besonders selektiv ist und optimale Ergebnisse im Temperaturbereich zwischen etwa 275 °C und 350 °C liefert.

Beispiel 4:

Herstellung und Anwendung eines Mangandioxid und Silberoxid enthaltenden Trägerkatalysators

4.1. Herstellung des Trägerkatalysators

Es wurden wiederum 200 g des unter 1.1. beschriebenen $\gamma$-Aluminiumoxid-Trägermaterials der Firma Condea verwendet.
In 130 ml entmineralisiertem Wasser wurden 25,1 g Mangandinitrattetrahydrat (0,1 mol entsprechend 8,7 g Mangandioxid) und 0,435 g Silbernitrat (0,0256 mol entsprechend 0,297 g Silberoxid) aufgelöst. Wie unter 1.1. beschrieben, wurde dann das Trägermaterial in die Lösung eingebracht, getrocknet und kalziniert. Der fertige Trägerkatalysator enthielt dann pro 100 g Trägermaterial 4,35 g Mangandioxid und 0,1485 g Silberoxid. Das Molverhältnis von Mangandioxid zu Silberoxid betrug 39:1.

4.2. Anwendung des Trägerkatalysators zur Entfernung des Ammoniakgehaltes in Ammoniak enthaltender Luft

In den Rohrreaktor wurden 50 ml (Gewicht: 35,1 g) des in Beispiel 4.1. hergestellten Trägerkatalysators eingebracht. Die Durchführung erfolgte wie in Beispiel 1.2. beschrieben. Die gewonnenen Daten sind in Tabelle 4 zusammengestellt.

**Tabelle 4:** $MnO_2$-$Ag_2O$-Trägerkatalysator

| Vers. Nr. | Kat.-Temp. [°C] | NH3-Konz. vor Behandlung [ppm] | Nach kat. Behandlung | | | | | | |
|---|---|---|---|---|---|---|---|---|---|
| | | | NH3-Konz. [ppm] | N2O [ppm] | NOX [ppm] | Umsatz [%] | Restgehalt NH3 [%] | Umwandlung in N2O [%] | Umwandlung in NOX [%] |
| 2.1. | 200 | 1000 | 400 | 0 | 3 | 60 | 40 | 0 | 0 |
| 2.2. | 225 | 1000 | 250 | 10 | 6 | 75 | 25 | 1 | 1 |
| 2.3. | 250 | 1000 | 120 | 10 | 8 | 88 | 12 | 1 | 1 |
| 2.4. | 275 | 1000 | 20 | 10 | 9 | 98 | 2 | 1 | 1 |
| 2.5. | 300 | 1000 | 0 | 10 | 13 | 100 | 0 | 1 | 1 |
| 2.6. | 325 | 1000 | 0 | 10 | 33 | 100 | 0 | 1 | 3 |
| 2.7. | 350 | 1000 | 0 | 10 | 66 | 100 | 0 | 1 | 7 |
| 2.8. | 375 | 1000 | 0 | 10 | 105 | 100 | 0 | 1 | 11 |

Die Katalysatortemperatur (Spalte Kat.Temp.) wurde im Gaseinlaßbereich gemessen
Der Restgehalt an $NH_3$ wurde bezogen auf den ursprünglichen Gehalt an $NH_3$

NH3 = $NH_3$
N2O = $N_2O$
NOX = $NO_x$

Der Tabelle 4 kann entnommen werden, daß dieser Katalysator im Temperaturbereich von 275 °C und 325 °C bei hohem Umsatz eine hohe Selektivität aufweist.

Beispiel 5:

Herstellung und Anwendung eines Mangandioxid und Eisen(III)Oxidenthaltenden Trägerkatalysators

5.1. Herstellung des Trägerkatalysators

Verwendet wurden wiederum 200 g des unter 1.1. beschriebenen $\gamma$-Aluminiumoxid-Trägermaterials der Firma Condea. In 130 ml entmineralisiertem Wasser wurden 25,1 g Mangandinitrattetrahydrat (0,1 mol entsprechend 8,7 g Mangandioxid) und 4,04 g Eisentrinitrat-nonahydrat (0,01 mol entsprechend 0,7985 $Fe_2O_3$) aufgelöst. In die Lösung wurden wie unter 1.1. beschrieben 200 g des Trägermaterials eingebracht, getrocknet und kalziniert. Das fertige Trägermaterial enthielt pro 100 g Trägermaterial 4,35 g Mangandioxid und 0,399 g $Fe_2O_3$. Das Molverhältnis von Mangandioxid zu Eisenoxid betrug 20:1.

5.2. Anwendung des Trägerkatalysators zur Entfernung des Ammoniakgehaltes in Ammoniak enthaltender Luft

In den Rohrreaktor wurden 50 ml (Gewicht: 34,7 g) des in Beispiel 5.1. hergestellten Trägerkatalysators eingebracht. Die Durchführung erfolgte wie in Beispiel 1.2. beschrieben. Die gewonnenen Daten sind in Tabelle 5 zusammengestellt. Dieser Trägerkatalysator zeichnet sich durch eine ganz besonders hohe Selektivität bezüglich der Umwandlung von $NH_3$ in $N_2$ aus. Distickstoffoxid entsteht überhaupt nicht, Stickoxide nur in verschwindenden Ausmaß. Gleichzeitig weist der Trägerkatalysator bereits ab 275 °C eine hohe Reaktivität auf. Im Temperaturbereich 300 °C bis 350 °C ist die Selektivität besonders hoch. Das Verfahren kann aber auch bei höheren Temperaturen durchgeführt werden, ohne daß die Bildung von $N_2O$ oder $NO_x$ in nennenswertem Umfang beobachtet wird.

**Tabelle 5:** $MnO_2$-$Fe_2O_3$-Trägerkatalysator

Nach kat. Behandlung

| Vers. Nr. | Kat.-Temp. [°C] | NH3-Konz. vor Behandlung [ppm] | NH3-Konz. [ppm] | N2O [ppm] | NOX [ppm] | Umsatz [%] | Restgehalt NH3 [%] | Umwandlung in N2O [%] | Umwandlung in NOX [%] |
|---|---|---|---|---|---|---|---|---|---|
| 2.1. | 200 | 1000 | 420 | 0 | 2 | 58 | 42 | 0 | 0 |
| 2.2. | 225 | 1000 | 380 | 0 | 3 | 62 | 38 | 0 | 0 |
| 2.3. | 250 | 1000 | 220 | 0 | 4 | 78 | 22 | 0 | 0 |
| 2.4. | 275 | 1000 | 50 | 0 | 6 | 95 | 5 | 0 | 1 |
| 2.5. | 300 | 1000 | 10 | 0 | 8 | 99 | 1 | 0 | 1 |
| 2.6. | 325 | 1000 | 0 | 0 | 10 | 100 | 0 | 0 | 1 |
| 2.7. | 350 | 1000 | 0 | 0 | 14 | 100 | 0 | 0 | 1 |
| 2.8. | 375 | 1000 | 0 | 0 | 28 | 100 | 0 | 0 | 3 |

Die Katalysatortemperatur (Spalte Kat.Temp.) wurde im Gaseinlaßbereich gemessen
Der Restgehalt an $NH_3$ wurde bezogen auf den ursprünglichen Gehalt an $NH_3$

NH3 = $NH_3$
N2O = $N_2O$
NOX = $NO_x$

EP 0 514 729 B1

**Patentansprüche**

1. Verfahren zur Entfernung oder Verminderung des Ammoniakgehalts aus mit Ammoniak belasteten Gasen unter selektiver Stickstoffbildung unter Kontaktieren des Gases bei erhöhter Temperatur mit einem Mischoxidkatalysator, welcher ein Oxid des Mangans umfaßt, dadurch gekennzeichnet, daß man das mit Ammoniak belastete Gas bei einer Temperatur zwischen 200 bis 400 °C mit einem Vollkatalysator oder einem Trägerkatalysator auf Basis von $SiO_2$, Alumosilikat oder $Al_2O_3$ kontaktiert, wobei das katalytisch aktive Gemisch ein Gemisch ausschließlich aus a) einem Oxid von Mangan und b) mindestens einem Oxid von Eisen, Kobalt, Nickel, Kupfer und/oder Silber ist.

2. Verfahren nach Anspruch 1, dadurch gekennzeichnet, daß das katalytisch aktive Gemisch ein Gemisch aus $MnO_2$ und $Fe_2O_3$, $MnO_2$ und $CoO$, $MnO_2$ und $NiO$, $MnO_2$ und $CuO$ oder $MnO_2$ und $Ag_2O$ ist.

3. Verfahren nach Anspruch 1 oder 2, dadurch gekennzeichnet, daß man das katalytisch aktive Gemisch als Trägerkatalysator einsetzt.

4. Verfahren nach Anspruch 3, dadurch gekennzeichnet, daß der Trägerkatalysator das katalytisch aktive Gemisch in einer Menge von 0,01 bis 20 Gew.-%, bezogen auf das Gesamtgewicht des Trägerkatalysators, enthält.

5. Verfahren nach einem der vorherigen Ansprüche, dadurch gekennzeichnet, daß man mit Ammoniak belastete, Sauerstoff enthaltende Gase einsetzt.

6. Verfahren nach einem der vorhergehenden Ansprüche, dadurch gekennzeichnet, daß man das Verfahren in der Wirbelschicht durchführt.

7. Verfahren nach einem der vorhergehenden Ansprüche, dadurch gekennzeichnet, daß man Gase mit einem Ammoniakgehalt von etwa 10 bis 5000 ppm behandelt.

8. Verfahren nach Anspruch 1, dadurch gekennzeichnet, daß man als Ammoniak enthaltendes Gas Abgas der Soda-Produktion einsetzt.

9. Verfahren nach einem der vorhergehenden Ansprüche, dadurch gekennzeichnet, daß man als Ammoniak enthaltendes Gas ein solches Gas einsetzt, welches erhalten wird, indem man Ammoniak oder Ammonium-Ionen enthaltende Wässer oder Abwässer auf einen pH-Wert oberhalb von etwa 10,5 bringt und das nunmehr im Wasser oder Abwasser enthaltene Ammoniak austreibt.

10. Verfahren nach einem der vorhergehenden Ansprüche, dadurch gekennzeichnet, daß man das katalytisch gereinigte Gas teilweise oder vollständig rückführt.

11. Trägerkatalysator zur Anwendung in einem Verfahren gemäß einem der Ansprüche 1 bis 10, gekennzeichnet durch ein katalytisch aktives Gemisch bestehend aus ausschließlich $MnO_2$ und $Fe_2O_3$ auf $\gamma$-$Al_2O_3$ als Träger.

**Claims**

1. Process for removing or reducing the ammonia content of ammonia-polluted gases with the selective formation of nitrogen, whereby the gas is contacted at elevated temperature with a mixed-oxide catalyst comprising an oxide of manganese, characterized in that the ammonia-polluted gas is contacted at a temperature between 200 and 400 °C with a full catalyst or a carrier catalyst based on $SiO_2$, alumosilicate or $Al_2O_3$, the catalytically active mixture being a mixture solely from a) an oxide of manganese and b) at least one oxide of iron, cobalt, nickel, copper and /or silver.

2. Process according to claim 1, characterized in that the catalytically active mixture is a mixture from $MnO_2$ and $Fe_2O_3$, $MnO_2$ and $CoO$, $MnO_2$ and $NiO$, $MnO_2$ and $CuO$ or $MnO_2$ and $Ag_2O$.

3. Process according to claim 1 or 2, characterized in that the catalytically active mixture is used in the form of a carrier catalyst.

4. Process according to claim 3, characterized in that the carrier catalyst comprises the catalytically active mixture in an amount ranging from 0,01 to 20 % by weight, relative to the total weight of the carrier catalyst.

5. Process according to one of the preceding claims, characterized in that ammonia-polluted, oxygen containing gases are treated.

6. Process according to one of the preceding claims, characterized in that it is carried out in a fluidised bed.

7. Process according to one of the preceding claims, characterized in that gases with an ammonia content of about 10 up to 5000 ppm are treated.

8. Process according to claim 1, characterized in that offgas of the soda production is treated as ammonia containing gas.

9. Process according to one of the preceding claims, characterized in that - as ammonia containing gas - a gas is treated which is obtained by setting the pH value of water or waste water containing ammonia or ammonium ions to a value greater than about 10,5 and stripping the ammonia contained in said water or waste water.

10. Process according to one fo the preceding claims, characterized in that the catalytically purified gas is recycled.

11. Carrier catalyst for use in a process according to one of the claims 1 to 10, characterized by a catalytically active mixture consisting solely of $MnO_2$ and $Fe_2O_3$ on $\gamma$-$Al_2O_3$ as a carrier.

## Revendications

1. Procédé pour éliminer ou diminuer le taux d'ammoniac de gaz chargés d'ammoniac sous formation sélective d'azote en contactant le gaz - après avoir augmenté la température - avec un catalyseur à mélange d'oxyde comprenant un oxyde de manganèse caractérisé en ce que l'on contacte - à une température entre 200 et 400 °C - le gaz chargé d'ammoniac avec un catalyseur (sans support) ou un catalyseur supporté à base de $SiO_2$, de silicate d'aluminium ou de $Al_2O_3$, le mélange actif catalytique étant un mélange composé exclusivement a) d'un oxyde de manganèse et b) d'un oxyde de fer, de cobalt, de nickel, de cuivre et/ou d'argent au moins.

2. Procédé selon la revendication 1, caractérisé en ce que le mélange catalytique actif est un mélange de $MnO_2$ et $Fe_2O_3$, $MnO_2$ et CoO, $MnO_2$ et NiO, $MnO_2$ et CuO ou bien de $MnO_2$ et $Ag_2O$.

3. Procédé selon la revendication 1 ou 2, caractérisé en ce que l'on utilise le mélange catalytique actif en tant que catalyseur supporté.

4. Procédé selon la revendication 3, caractérisé en ce que le catalyseur supporté contient le mélange catalytique actif dans une quantité de 0,01 à 20 % en poids du poids total du catalyseur supporté.

5. Procédé selon l'une des revendications précédentes, caractérisé en ce que l'on utilise des gaz chargés d'ammoniac et contenant de l'oxygène.

6. Procédé selon l'une des revendications précédentes, caractérisé en ce que l'on réalise le procédé dans la couche fluidisée.

7. Procédé selon l'une des revendications précédentes, caractérisé en ce que l'on traite des gaz contenant environ 10 à 5000 ppm d'ammoniac.

8. Procédé selon la revendication 1, caractérisé en ce que l'on utilise du gaz résiduaire de la production de carbonate de soude comme gaz contenant de l'ammoniac.

9. Procédé selon l'une des revendications précédentes, caractérisé en ce que l'on utilise - comme gaz contenant de l'ammoniac - un gaz obtenu en ammenant d'abord aux alentours de ou au-dessus de 10,5 le taux de pH dans des eaux contenant de l'ammoniac ou des ions d'ammonium, ou bien dans des eaux résiduelles, puis en expulsant l'ammoniac présent maintenant dans l'eau ou dans les eaux résiduelles.

10. Procédé selon l'une de revendications précédentes, caractérisé en ce que l'on réintroduit entièrement ou partiellement le gaz purifié par catalyse.

11. Catalyseur supporté pour utilisation dans un procédé selon l'une des revendications 1 à 10, caractérisé par un mélange catalytique actif ayant exclusivement $MnO_2$ et $Fe_2O_3$ sur $\gamma\text{-}Al_2O_3$ comme support.